# EUROPEAN PATENT APPLICATION

(11) **EP 3 104 262 A2**
(43) Date of publication of application: **14.12.2016**
(21) Application number: 15196756.9
(22) Date of filing: 27.11.2015
(51) Int. Cl.: G06F 3/042, H04N 9/31

(54) **SYSTEMS AND METHODS FOR INTERACTIVE SURFACE USING CUSTOM-BUILT TRANSLUCENT MODELS FOR IMMERSIVE EXPERIENCE**

(30) Priority: 09.06.2015 IN 2869CH2015; 31.07.2015 US 201514814811
(71) Applicant: Wipro Limited, 560 035 Karnataka (IN)
(72) Inventor: KOSANAM, Sarayu, 521101 Andhra Pradesh (IN)
(74) Representative: Finnegan Europe LLP

(57) **Abstract**

The disclosure related generally to systems and methods for simple and affordable interactive translucent surface using custom-built translucent models for immersive experience. A first content is projected on the interactive translucent surface (102). An object (106) is placed on at least one mounting means (104). The object is detected by an imaging device (108). Further, a second content is retrieved from a database (112), wherein the second content is mapped to the detected object. The first content is updated to the second content on the interactive translucent surface (102).

## Description

### Technical Field

This disclosure relates generally to the projection of content on an interactive surface, and more particularly to systems and methods for a simple and affordable interactive surface using custom-built translucent models for an immersive experience.

### Background

The provision of an immersive experience is playing a key role in the digital world. Interactive surfaces are becoming common components of information based activities. Digital information can be displayed on the surface of desks, tables, or walls, and can be manipulated using multi-touch interfaces and tangible input devices. There are a number of interactive surface solutions available that give an immersive experience. Some examples include: a) Bradesco next life cycle; b) ActivTable from Promethean.

These solutions may offer a good user experience but are expensive. Mass deployment and maintenance of these solutions is therefore a challenge. Further, these solutions need plain level surfaces. Also, in many scenarios, not all features provided by the above solutions may be needed as the desire may be to create a simple immersive user experience. Due to their expensive nature that results from the large number of features, some known interactive surface solutions are considered unaffordable for relatively simple applications where less complicated features are desired.

In view of the above drawbacks associated with the existing solutions, there is a desire to provide a less costly, more easy to customize, and sufficiently effective infrastructure for an immersive experience.

### SUMMARY

Disclosed herein is a method of projecting content on an interactive translucent surface. The method includes projecting a first content on the interactive translucent surface; placing at least one object on at least one mounting means; detecting, using at least one imaging device, the at least one object placed on the at least one mounting means; retrieving a second content from a database, the second content being mapped to the detected object; and updating the first content to the second content on the interactive translucent surface.

The interactive translucent surface may be made from tracing paper.

The mounting means may be a transparent table.

The object may be placed on the transparent portion.

The interactive translucent surface may comprise a customizable three dimensional model of at least one of book, menu card, and paper.

In an aspect of the invention, a system for projecting content is disclosed. The system includes an interactive translucent surface for displaying a first content;
at least one mounting means; at least one imaging device to detect at least one object disposed on the at least one mounting means; a computing device to map the at least one object to a second content, the computing device coupled to the imaging device; and wherein the first content on the interactive translucent surface is modified to the second content in response to the at least one object being mapped to the second content.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 illustrates an exemplary system for projecting content on an interactive surface for an immersive experience in accordance with some embodiments of the present disclosure; and
FIG. 2 is a flowchart for illustrating an exemplary method of projecting content on the translucent model/surface according to some embodiments of the present disclosure.

### DETAILED DESCRIPTION

Exemplary embodiments are described with reference to the accompanying drawings. Wherever convenient, the same reference numbers are used throughout the drawings to refer to the same or like parts. While examples and features of the disclosed principles are described herein, modifications, adaptations, and other implementations are possible without departing from the scope of the disclosed embodiments. It is intended that the following detailed description be considered as exemplary only, with the true scope being indicated by the following claims.

In the present disclosure, the word "exemplary" is used herein to mean "serving as an example, instance, or illustration." Any embodiment or implementation of the present disclosure described herein as "exemplary" is not necessarily to be construed as preferred or advantageous over other embodiments.

While the present disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus preceded by "comprises... a" does not, without more constraints, preclude the existence of other elements or additional elements in the system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The present disclosure discloses systems and methods for a simple and affordable interactive surface using custom-built translucent models for an immersive experience. The present disclosure provides a solution that may be affordable and easy to maintain, and may offer a reasonably good immersive experience. Instead of using only plain level surfaces, the disclosure may use customizable low-cost translucent models of everyday objects which have surfaces for interaction. These everyday objects include books, papers, menu cards in restaurants, etc.

The system uses following components:
- A translucent surface (can be a plain surface or a translucent model of an everyday object).
- A transparent surface for object detection.
- A long throw projector.
- An imaging device.
- An adjustable mirror.

The system may be implemented using a short throw projector for:
- Short distance projection
- Avoiding shadows

However, these projectors may be costly. To reduce cost and avoid shadows, a long throw projector may be converted into a short throw projector using a mirror.

The system may use models of everyday objects with affordable material. Further, the use of a short throw projector may be obviated by using a long throw projector and a mirror.

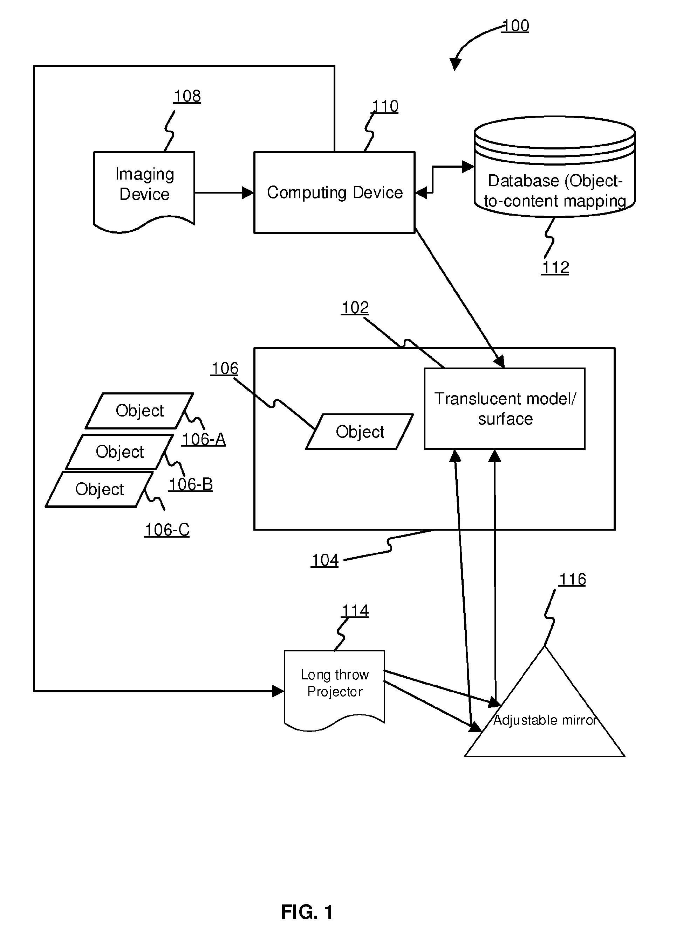

FIG. 1 illustrates an exemplary system 100 for projecting content on an interactive surface for an immersive experience in accordance with some embodiments of the present disclosure. Referring to FIG. 1, the system 100 comprises a translucent surface/model 102 disposed on at least one mounting means 104. The mounting means 104 may be a glass table. The mounting means 104 includes at least a portion of it being transparent. The translucent surface/model 102 may be built using low cost material like tracing paper and is an interactive surface. These are real, three dimensional models that can be created as per use case. For example, experience of reading a book may be provided by creating a model of the book. Content may be projected from beneath onto this model/surface.

Further, an object 106 may be placed on the mounting means 104. In an exemplary embodiment, the object 106 is placed on the transparent portion of the mounting means 104. For example, the object 106 may be cards. The object 106 may be selected from a plurality of objects (106-a, 106-b, 106-c....). The object 106 may act as a content cue for changing the projected content on the translucent model/surface 102. According to some embodiments, the content cue may be recognized based on color, a geometric shape, a quick response (QR) code, or text associated with the object 106.

The content cue may be recognized by detecting the object 106. This detection is performed by one or more imaging devices 108. The one or more imaging devices 108 may be low cost cameras. The one or more imaging devices 108 may be communicatively coupled to one or more computing devices 110. In an exemplary embodiment, the one or more computing devices 110 may be a tablet, phablet, personal digital assistant (PDA), laptop, personal computer etc.

The one or more computing devices 110 are further in communication with a database 112. The database 112 includes information regarding the mapping of the content cue associated with the object 106 to the content stored in the database 112.

Initially, a first content may be displayed on the computing device 110. The first content may be a "Hello" message. The computing device 110 communicates the first content to long throw projector 114 that further communicates the first content to an adjustable mirror 116 that reflects the first content on the translucent model/surface 102, contributing to the cost effectiveness of the system 100. As noted above, the first content is projected from behind (rear projection) on the translucent model/surface 102, thereby avoiding shadows. The arrangement of the long throw projector 114 and the adjustable mirror 116 replaces a short throw projector which can be costly.

Further, the object 106 may be detected by the imaging device 108. The detected object 106 is communicated to the computing device 110. Based on the content cue that may be recognized based on color, geometric shape, a quick response (QR) code, or text associated with the object 106, a second content mapped to the object 106 is retrieved by the computing device 110. The computing device 110 communicates the second content to the long throw projector 114 that further projects the second content to the adjustable mirror 116 that reflects the second content on the translucent model/surface 102, thereby updating the projected first content to the second content.

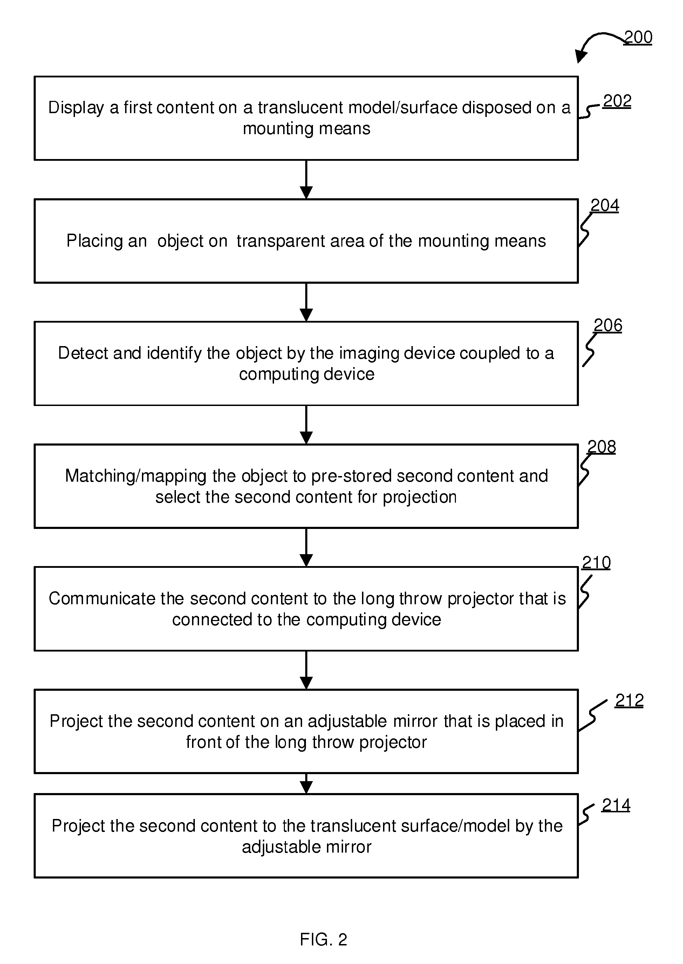

FIG. 2 is a flowchart 200 for illustrating an exemplary method of projecting content on the translucent model/surface 102 according to some embodiments of the present disclosure.

At step 202, the translucent model/surface 102 displays a first content. The first content may be static content. As discussed earlier, the static content may be a "Hello" message.

At step 204, the object 106 is placed on the transparent area of the mounting means 104.

At step 206, the object 106 is detected and identified by the imaging device 108 coupled to the computing device 110.

At step 208, the object 106 is matched/mapped to the pre-stored second content and the second content is selected for projection. The second content may be the content of interest to a user or relevant content.

At step 210, the selected second content is communicated to the long throw projector 114 that is connected to the computing device 110.

At step 212, the second content is projected to the adjustable mirror 116 that is placed in front of the long throw projector 114.

At step 214, the adjustable mirror 116 projects the second content to the translucent surface/model 102. The translucent surface/model 102 is placed on the mounting means 104.

The present disclosure offers many advantages. The system 100 is highly affordable for mass deployment. Maintenance of the system 100 is easy because it involves simple set up and low cost materials like tracing paper. The system 100 is not constrained only to plain surfaces. Any customizable translucent model/surface 102 can be created and used that offers a reasonably good immersive user experience. The system 100 is cost effective as it can be attached and detached . This helps in making the system portable.

It is intended that the disclosure and examples be considered as exemplary only, with a true scope of disclosed embodiments being indicated by the following claims.

## Claims

1. A method of projecting content on an interactive translucent surface, the method comprising:
projecting a first content on the interactive translucent surface;
placing at least one object on at least one mounting means;
detecting, using at least one imaging device, the at least one object placed on the at least one mounting means;
retrieving a second content from a database, the second content being mapped to the detected object; and
updating the first content to the second content on the interactive translucent surface.

2. The method of claim 1, wherein projecting the first content on the interactive translucent surface comprises:
projecting, by a long throw projector, the first content on an adjustable mirror; and
reflecting, by the adjustable mirror, the first content on the interactive translucent surface.

3. The method of claim 2, wherein updating the first content to the second content on the interactive translucent surface comprises:
projecting, by the long throw projector, the retrieved second content on the adjustable mirror; and
reflecting, by the adjustable mirror, the second content on the interactive translucent surface.

4. The method of any one of claims 1 to 3, wherein mapping of the second content to the detected object is based on at least one of a color, a quick response code (QR code), and a geometric shape associated with the detected object.

5. The method of any one of claims 1 to 4 , further comprising forwarding information associated with the detected object to a computing device, the computing device being communicatively coupled to the imaging device.

6. The method of any one of claims 1 to 5, wherein the interactive translucent surface is disposed on at least one mounting means, the at least one mounting means comprising at least a transparent portion.

7. A system for projecting content, the system comprising:
an interactive translucent surface for displaying a first content;
at least one mounting means;
at least one imaging device to detect at least one object disposed on the at least one mounting means;
a computing device to map the at least one object to a second content, the computing device coupled to the imaging device; and
wherein the first content on the interactive translucent surface is modified to the second content in response to the at least one object being mapped to the second content.

8. The system of claim 7, further comprising:
a long throw projector to project the first content on an adjustable mirror; and
an adjustable mirror to reflect the first content on the interactive translucent surface.

9. The system of claim 8, wherein updating the first content to the second content on the interactive translucent surface comprises:
projecting the second content on the adjustable mirror; and
reflecting, by the adjustable mirror, the second content on the interactive translucent surface.

10. The system of any one of claims 7 to 9, wherein the computing device is configured to map the at least one object to the second content based on at least one of a color, a quick response code (QR code), and a geometric shape associated with the detected object.

11. The method of any one of claims 1 to 6 or the system of any one of claims 7 to 10, wherein the interactive translucent surface is made from tracing paper.

12. The system of any one of claims 7 to 11, wherein the mounting means comprise at least a transparent portion.

13. The method of claim 6 or the system of any one of claims 7 to 12, wherein the mounting means is a transparent table.

14. The method of claim 6 or the system of claim 12, wherein the at least one object is placed on the transparent portion.

15. The method of any one of claims 1 to 6 or the system of any one of claims 7 to 14, wherein the interactive translucent surface comprises a customizable three dimensional model of at least one of a book, a menu card, and a paper.
